(19) Europäisches Patentamt / European Patent Office / Office européen des brevets

(11) **EP 4 589 692 A1**

(12) **EUROPEAN PATENT APPLICATION**
published in accordance with Art. 153(4) EPC

(43) Date of publication:
**23.07.2025 Bulletin 2025/30**

(21) Application number: **23865419.8**

(22) Date of filing: **08.09.2023**

(51) International Patent Classification (IPC):
$H01M\ 4/62^{(2006.01)}$ $\quad$ $H01G\ 11/06^{(2013.01)}$
$H01G\ 11/38^{(2013.01)}$ $\quad$ $H01M\ 4/13^{(2010.01)}$
$H01M\ 4/139^{(2010.01)}$ $\quad$ $H01M\ 4/505^{(2010.01)}$
$H01M\ 4/525^{(2010.01)}$ $\quad$ $H01M\ 4/58^{(2010.01)}$
$H01M\ 4/587^{(2010.01)}$

(52) Cooperative Patent Classification (CPC):
H01G 11/06; H01G 11/38; H01M 4/13; H01M 4/139;
H01M 4/505; H01M 4/525; H01M 4/58;
H01M 4/587; H01M 4/62; Y02E 60/10

(86) International application number:
**PCT/JP2023/032795**

(87) International publication number:
**WO 2024/058064 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022 JP 2022147639**

(71) Applicant: **ENEOS Materials Corporation
Tokyo 105-7109 (JP)**

(72) Inventors:
- **NAKAYAMA, Takuya
  Tokyo 105-7109 (JP)**
- **MASUDA, Kana
  Tokyo 105-7109 (JP)**

(74) Representative: **TBK
Bavariaring 4-6
80336 München (DE)**

(54) **BINDER COMPOSITION FOR POWER STORAGE DEVICES, SLURRY FOR POWER STORAGE DEVICE ELECTRODES, POWER STORAGE DEVICE ELECTRODE, AND POWER STORAGE DEVICE**

(57) Provided is a binder composition for an electrical storage device, which is an aqueous binder, can produce an electrical storage device electrode excellent in adhesiveness and flexibility, and can improve a cycle characteristic by reducing an increase in internal resistance of the electrical storage device. A binder composition for an electrical storage device according to the present invention includes: a polymer (A); and a liquid medium (B). When a total of repeating units in the polymer (A) is defined as 100 mass%, the polymer (A) contains 15 mass% to 64 mass% of a repeating unit (a1) derived from an unsaturated carboxylic acid ester having an aliphatic hydrocarbon group (except an unsaturated carboxylic acid ester having an alicyclic hydrocarbon group), and 35 mass% to 84 mass% of a repeating unit (a2) derived from an aromatic vinyl compound, and tanδ (loss elastic modulus/storage elastic modulus) in dynamic viscoelasticity of the polymer (A) expresses only one peak top in a range of from -50°C to 0°C and one peak top in a range of from 50°C to 150°C.

## Description

Technical Field

The present invention relates to a binder composition for an electrical storage device, a slurry for an electrical storage device electrode, an electrical storage device electrode, and an electrical storage device.

Background Art

In recent years, an electrical storage device having a high voltage and a high energy density has been demanded as a power source for driving electronic equipment. A lithium ion battery, a lithium ion capacitor, or the like is promising as such electrical storage device.

An electrode to be used for such electrical storage device is produced by applying a composition (slurry for an electrical storage device electrode) containing an active material and a polymer that functions as a binder to a surface of a current collector and drying the resultant. Characteristics demanded of the polymer to be used as a binder include a binding ability between the active materials and an adhesive ability between the active material and the current collector. The characteristics may also include powder fall-off resistance that prevents fine powder or the like of the active material from being detached from a coating film of the applied and dried composition (hereinafter sometimes referred to as "active material layer") at the time of cutting of the active material layer. Such binder material expresses satisfactory adhesiveness and reduces the internal resistance of a battery resulting from the binder material, thereby being able to impart a satisfactory charge-discharge characteristic to the electrical storage device.

With regard to the binding ability between the active materials, the adhesive ability between the active material and the current collector, and the powder fall-off resistance, it has been empirically revealed that their qualities of performance have a nearly proportional relationship with each other. Accordingly, in this description, those properties are hereinafter sometimes collectively referred to with the term "adhesiveness".

In recent years, in order to produce an electrochemical device excellent in capacity and charge-discharge cycle characteristic, the use of a positive electrode active material having high reactivity with water has been considered. In addition, polyvinylidene fluoride (PVDF) has most widely been used as an organic solvent-based binder for an electrical storage device electrode. PVDF has a satisfactory binding property and oxidation resistance, but its environmental load is high because PVDF contains a fluorine atom, and instability of the raw material supply has become significant (see, for example, Patent Literature 1).

Under such background, various binder materials have been proposed with a view to solving various problems of a slurry for a positive electrode (see, for example, Patent Literatures 1 and 2).

Citation List

Patent Literature

[PTL 1] JP H10-298386 A
[PTL 2] JP 2019-194944 A

Summary of Invention

Technical Problem

However, it has been known that, in the method including using a slurry for a positive electrode containing PVDF that has hitherto been used or sulfonated PVDF disclosed in Patent Literature 1 described above, a crosslinked product along with dehydrofluorination is formed particularly under basic conditions. When the crosslinked product is formed in the slurry for a positive electrode, adhesiveness has been inhibited in some cases. In addition, an aprotic polar solvent, such as dimethylformamide, dimethyl acetamide, or N-methylpyrrolidone, is used in the slurry for a positive electrode containing PVDF that has hitherto been used, and hence an environmental load is high, and there has been a problem in that large cost is needed for elimination equipment or liquid waste disposal. Accordingly, for the slurry for a positive electrode, there has been a growing need for an aqueous binder that can prepare a mixed slurry without using an organic solvent.

According to some aspects of the present invention, there is provided a binder composition for an electrical storage device, which is an aqueous binder, can produce an electrical storage device electrode excellent in adhesiveness and flexibility, and can improve a cycle characteristic by reducing an increase in internal resistance of the electrical storage device.

The present invention has been made in order to solve at least part of the above-mentioned problems, and can be realized as any one of the following aspects.

According to one aspect of the present invention, there is provided a binder composition for an electrical storage device, including:

a polymer (A); and
a liquid medium (B),
wherein when a total of repeating units in the polymer (A) is defined as 100 mass%, the polymer (A) contains

15 mass% to 64 mass% of a repeating unit (a1) derived from an unsaturated carboxylic acid ester having an aliphatic hydrocarbon group (except an unsaturated carboxylic acid ester having an alicyclic hydrocarbon group), and
35 mass% to 84 mass% of a repeating unit (a2) derived from an aromatic vinyl compound, and

wherein tan$\delta$ (loss elastic modulus/storage elastic modulus) in dynamic viscoelasticity of the polymer (A) expresses only one peak top in a range of from -50°C to 0°C and one peak top in a range of from 50°C to 150°C.

In the binder composition for an electrical storage device according to the one aspect, the polymer (A) may further contain 0.1 mass% to 10 mass% of a repeating unit (a3) derived from an unsaturated carboxylic acid.

In the binder composition for an electrical storage device according to the one aspect, the polymer (A) may have an electrolytic solution swelling ratio of 120 mass% or more and 300 mass% or less when the polymer (A) is immersed in a solvent formed of propylene carbonate and diethyl carbonate at a volume ratio of 1:1 under conditions of 70°C and 24 hours.

In the binder composition for an electrical storage device according to the one aspect,

the polymer (A) may be polymer particles, and
the polymer particles may have a number average particle diameter of 50 nm or more and 500 nm or less.

In the binder composition for an electrical storage device according to the one aspect, the polymer particles may have a surface acidity of 0.05 mmol/g or more and 2 mmol/g or less.

According to one aspect of the present invention, there is provided a slurry for an electrical storage device electrode, including:

the binder composition for an electrical storage device of any one of the above-mentioned aspects; and
an active material.

In the slurry for an electrical storage device electrode according to the one aspect, the slurry for an electrical storage device electrode may include, as the active material, at least one kind selected from the group consisting of: an olivine-type lithium-containing phosphoric acid compound; lithium cobaltate; lithium nickelate; lithium manganate; and ternary lithium nickel cobalt manganate.

In the slurry for an electrical storage device electrode according to the one aspect, the slurry for an electrical storage device electrode may include, as the active material, a carbon material.

According to one aspect of the present invention, there is provided an electrical storage device electrode, including:

a current collector; and
an active material layer formed on a surface of the current collector by applying and drying the slurry for an electrical storage device electrode of the one aspect.

According to one aspect of the present invention, there is provided an electrical storage device, including the electrical storage device electrode of the one aspect.

Advantageous Effects of Invention

The binder composition for an electrical storage device according to the present invention can be an aqueous binder, can improve the adhesiveness and flexibility of an electrical storage device electrode, and can improve a cycle characteristic by reducing an increase in internal resistance of an electrical storage device.

Description of Embodiments

Preferred embodiments of the present invention are described in detail below. It should be understood that the present invention is not limited only to the embodiments described below, and encompasses various modifications that are implemented without departing from the gist of the present invention.

Herein, "(meth)acrylic acid ⋯" represents "acrylic acid ⋯" or "methacrylic acid ⋯," "⋯ (meth)acrylate" represents "⋯ acrylate" or "⋯ methacrylate," and "(meth)acrylamide" represents "acrylamide" or "methacrylamide".

Herein, a numerical range described like "from X to Y" is to be construed to include a numerical value X as a lower limit value and a numerical value Y as an upper limit value.

1. Binder Composition for Electrical Storage Device

A binder composition for an electrical storage device according to an embodiment of the present invention includes a polymer (A) and a liquid medium (B). When the total of repeating units in the polymer (A) is defined as 100 mass%, the polymer (A) contains 15 mass% to 64 mass% of a repeating unit (a1) derived from an unsaturated carboxylic acid ester having an aliphatic hydrocarbon group (except an unsaturated carboxylic acid ester having an alicyclic hydrocarbon group), and 35 mass% to 84 mass% of a repeating unit (a2) derived from an aromatic vinyl compound. In addition, tan$\delta$ (loss elastic modulus/storage elastic modulus) in the dynamic viscoelasticity of the polymer (A) expresses only one peak top in the range of from -50°C to 0°C and one peak top in the range of from 50°C to 150°C.

The binder composition for an electrical storage device according to this embodiment may be used as a material for producing an electrical storage device electrode (active material layer) improved in binding ability between the active materials and adhesive ability between the active material and a current collector, in powder fall-off resistance, and in electrode flexibility, and may also be used as a material for forming a protective film for suppressing a short circuit due to dendrites generated along with charge and discharge. Each component contained in the binder composition for an electrical storage device according to this embodiment is described in detail below.

1.1. Polymer (A)

The binder composition for an electrical storage device according to this embodiment includes the polymer (A). The polymer (A) may be in the form of latex dispersed in the liquid medium (B), or may be in a state of being dissolved in the liquid medium (B).

The constituent repeating units of the polymer (A), the physical properties of the polymer (A), and a production method of the polymer (A) are described below in the stated order.

1.1.1. Constituent Repeating Units of Polymer (A)

When the total of the repeating units in the polymer (A) is defined as 100 mass%, the polymer (A) contains 15 mass% to 64 mass% of the repeating unit (a1) derived from an unsaturated carboxylic acid ester having an aliphatic hydrocarbon group (except an unsaturated carboxylic acid ester having an alicyclic hydrocarbon group) (hereinafter sometimes referred to simply as "repeating unit (a1)"), and 35 mass% to 84 mass% of the repeating unit (a2) derived from an aromatic vinyl compound (hereinafter sometimes referred to simply as "repeating unit (a2)"). In addition, the polymer (A) may contain, in addition to the repeating unit (a1) and the repeating unit (a2), a repeating unit derived from any other monomer copolymerizable therewith.

1.1.1.1. Repeating Unit (a1) derived from Unsaturated Carboxylic Acid Ester having Aliphatic Hydrocarbon Group

In the present invention, the "unsaturated carboxylic acid ester having an aliphatic hydrocarbon group" does not include a polyvalent (meth)acrylic acid ester to be described later and the unsaturated carboxylic acid ester having an alicyclic hydrocarbon group. When the total of the repeating units in the polymer (A) is defined as 100 mass%, the content ratio of the repeating unit (a1) derived from an unsaturated carboxylic acid ester having an aliphatic hydrocarbon group is from 15 mass% to 64 mass%. The lower limit of the content ratio of the repeating unit (a1) is preferably 15 mass%, more preferably 18 mass%, particularly preferably 20 mass%. The upper limit of the content ratio of the repeating unit (a1) is preferably 64 mass%, more preferably 60 mass%, particularly preferably 55 mass%. When the polymer (A) contains the repeating unit (a1) in the above-mentioned ranges, the dispersibility of an active material or a filler becomes satisfactory. Thus, it becomes possible to produce a uniform active material layer or protective film. Further, a structural defect in the electrode plate of the electrical storage device is eliminated because of an improvement in electrode flexibility, and hence the device shows a satisfactory charge-discharge characteristic. In addition, stretching and shrinking properties can be imparted to the polymer (A) covering the surface of the active material, and adhesiveness can be improved by virtue of stretching and shrinking of the polymer (A). Accordingly, the device shows a satisfactory charge-discharge durability characteristic.

The unsaturated carboxylic acid ester having an aliphatic hydrocarbon group is not particularly limited, and a (meth)acrylic acid ester is preferred. Specific examples of such (meth)acrylic acid ester may include methyl (meth)acrylate, ethyl (meth)acrylate, n-propyl (meth)acrylate, iso-propyl (meth)acrylate, n-butyl (meth)acrylate, isobutyl (meth)acrylate, n-amyl (meth)acrylate, isoamyl (meth)acrylate, hexyl (meth)acrylate, n-octyl (meth)acrylate, 2-ethylhexyl (meth)acrylate, nonyl (meth)acrylate, and decyl (meth)acrylate, and one or more kinds selected therefrom may be used. Of those, one or more kinds selected from methyl (meth)acrylate, ethyl (meth)acrylate, n-butyl (meth)acrylate, and 2-ethylhexyl (meth)acrylate are preferred, and one or more kinds selected from n-butyl (meth)acrylate and 2-ethylhexyl (meth)acrylate are more preferred.

1.1.1.2. Repeating Unit (a2) derived from Aromatic Vinyl Compound

When the total of the repeating units in the polymer (A) is defined as 100 mass%, the content ratio of the repeating unit (a2) derived from an aromatic vinyl compound is preferably from 35 mass% to 84 mass%. The lower limit of the content ratio of the repeating unit (a2) is preferably 35 mass%, more preferably 40 mass%, particularly preferably 45 mass%. The upper limit of the content ratio of the repeating unit (a2) is preferably 84 mass%, more preferably 80 mass%, particularly preferably 75 mass%. When the polymer (A) contains the repeating unit (a2) in the above-mentioned ranges, fusion between particles of the polymer (A) dispersed in the active material layer can be suppressed to improve the permeability of an electrolytic solution. Accordingly, an increase in internal resistance of an electrical storage device is reduced, and the device shows a satisfactory repeating charge-discharge characteristic. Further, an electrical storage device electrode, which expresses a satisfactory binding property to graphite or the like to be used as the active material and is excellent in adhesiveness, is obtained.

The aromatic vinyl compound is not particularly limited, but examples thereof include styrene, $\alpha$-methylstyrene, p-methylstyrene, vinyltoluene, chlorostyrene, and divinylbenzene, and one or more kinds selected therefrom may be used.

1.1.1.3. Other Repeating Units

The polymer (A) may contain, in addition to the repeating unit (a1) and the repeating unit (a2), a repeating unit derived from any other monomer copolymerizable therewith. Examples of such repeating unit include: a repeating unit (a3) derived from an unsaturated carboxylic acid (hereinafter sometimes referred to simply as "repeating unit (a3)"); a repeating unit (a4) derived from a polyfunctional (meth)acrylic acid ester (hereinafter sometimes referred to simply as "repeating unit (a4)"); a repeating unit (a5) derived from any other unsaturated carboxylic acid ester (hereinafter sometimes referred to simply as "repeating unit (a5)"); a repeating unit (a6) derived from (meth)acrylamide (hereinafter sometimes referred to simply as "repeating unit (a6)"); a repeating unit (a7) derived from an $\alpha,\beta$-unsaturated nitrile compound (hereinafter sometimes referred to simply as "repeating unit (a7)"); a repeating unit (a8) derived from a compound having a sulfonic acid group (hereinafter sometimes referred to simply as "repeating unit (a8)"); and a repeating unit derived from a cationic monomer.

<Repeating Unit (a3) derived from Unsaturated Carboxylic Acid>

The polymer (A) may contain the repeating unit (a3) derived from an unsaturated carboxylic acid. The unsaturated carboxylic acid is not particularly limited, but examples thereof may include monocarboxylic acids and dicarboxylic acids (including anhydrides), such as acrylic acid, methacrylic acid, crotonic acid, maleic acid, fumaric acid, and itaconic acid, and one or more kinds selected therefrom may be used. One or more kinds selected from acrylic acid, methacrylic acid, and itaconic acid are each preferably used as the unsaturated carboxylic acid.

When the total of the repeating units in the polymer (A) is defined as 100 mass%, the content ratio of the repeating unit (a3) derived from the unsaturated carboxylic acid is preferably from 0.1 mass% to 10 mass%, more preferably from 1 mass% to 8 mass%. When the polymer (A) contains the repeating unit (a3) in the above-mentioned ranges, the dispersibility of an active material or a filler becomes satisfactory. Thus, it becomes possible to produce a uniform active material layer or protective film. Accordingly, a structural defect in the electrode plate of the electrical storage device is eliminated, and hence the device shows a satisfactory charge-discharge characteristic.

<Repeating Unit (a4) derived from Polyfunctional (Meth)acrylic Acid Ester>

The polymer (A) may contain the repeating unit (a4) derived from a polyfunctional (meth)acrylic acid ester. When the polymer (A) contains the repeating unit (a4), it may be easier to suppress the electrolytic solution swelling ratio of the polymer (A) in an electrolytic solution.

In the present invention, the term "polyfunctional" means that the (meth)acrylic acid ester further has one or more kinds of functional groups selected from a polymerizable double bond and an epoxy group in addition to one polymerizable double bond that the ester has.

Specific examples of the polyfunctional (meth)acrylic acid ester may include glycidyl (meth)acrylate, allyl (meth) acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, and ethylene di(meth)acrylate, and one or more kinds selected therefrom may be used. Of those, one or more kinds selected from allyl (meth)acrylate and ethylene glycol di(meth)acrylate are preferred, and allyl (meth)acrylate is particularly preferred.

When the total of the repeating units in the polymer (A) is defined as 100 mass%, the content ratio of the repeating unit (a4) derived from a polyvalent (meth)acrylic acid ester is preferably from 0.1 mass% to 10 mass%, more preferably from 1 mass% to 8 mass%. It is preferred that the polymer (A) contain the repeating unit (a4) in the above-mentioned ranges because it becomes easier to suppress the electrolytic solution swelling ratio of the polymer (A) in the electrolytic solution.

<Repeating Unit (a5) derived from Other Unsaturated Carboxylic Acid Ester>

The polymer (A) may contain the repeating unit (a5) derived from any other unsaturated carboxylic acid ester. In the present invention, the term "other unsaturated carboxylic acid ester" refers to an unsaturated carboxylic acid ester other than the unsaturated carboxylic acid ester having an aliphatic hydrocarbon group and the polyfunctional (meth) acrylic acid ester.

The other unsaturated carboxylic acid ester is not particularly limited, but examples thereof include an unsaturated carboxylic acid ester having a hydroxy group and an unsaturated carboxylic acid ester having a phenoxy group. Examples of the unsaturated carboxylic acid ester having a hydroxy group include 2-hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth) acrylate, 5-hydroxypentyl (meth)acrylate, 6-hydroxyhexyl (meth)acrylate, and glycerin mono(meth)acrylate. An example of the unsaturated carboxylic acid ester having a phenoxy group is phenoxy diethylene glycol (meth)acrylate. One or more kinds selected therefrom may each be used as the other unsaturated carboxylic acid ester. Of those, 2-hydroxyethyl (meth) acrylate and glycerin mono(meth)acrylate are preferred. The polymer (A) is preferably free of a repeating unit derived from an unsaturated carboxylic acid ester having an alicyclic hydrocarbon group.

When the total of the repeating units in the polymer (A) is defined as 100 mass%, the content ratio of the repeating unit (a5) derived from the other unsaturated carboxylic acid ester is preferably from 0 mass% to 10 mass%, more preferably from 1 mass% to 8 mass%. When the polymer (A) contains the repeating unit (a5) in the above-mentioned ranges, the dispersibility of an active material or a filler in a slurry becomes satisfactory in some cases. In addition, an active material layer to be obtained has moderate flexibility, resulting in an improvement in adhesiveness between a current collector and the active material layer in some cases.

<Repeating Unit (a6) derived from (Meth)acrylamide>

The polymer (A) may contain the repeating unit (a6) derived from (meth)acrylamide. The (meth)acrylamide is not particularly limited, but examples thereof may include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, and maleic acid amide, and one or more kinds selected therefrom may be used.

When the total of the repeating units in the polymer (A) is defined as 100 mass%, the content ratio of the repeating unit (a6) derived from (meth)acrylamide is preferably from 0 mass% to 5 mass%, more preferably from 1 mass% to 4 mass%. When the polymer (A) contains the repeating unit (a6) in the above-mentioned ranges, the dispersibility of an active material or a filler in a slurry becomes satisfactory in some cases. In addition, an active material layer to be obtained has moderate flexibility, resulting in an improvement in adhesiveness between a current collector and the active material layer in some cases.

<Repeating Unit (a7) derived from $\alpha,\beta$-Unsaturated Nitrile Compound>

The polymer (A) may contain the repeating unit (a7) derived from an $\alpha,\beta$-unsaturated nitrile compound. The $\alpha,\beta$-unsaturated nitrile compound is not particularly limited, but examples thereof may include acrylonitrile, methacrylonitrile, $\alpha$-chloroacrylonitrile, $\alpha$-ethylacrylonitrile, and vinylidene cyanide, and one or more kinds selected therefrom may be used. Of those, one or more kinds selected from acrylonitrile and methacrylonitrile are preferred, and acrylonitrile is particularly preferred.

When the total of the repeating units in the polymer (A) is defined as 100 mass%, the content ratio of the repeating unit (a7) derived from an $\alpha,\beta$-unsaturated nitrile compound is preferably from 0 mass% to 10 mass%, more preferably from 1 mass% to 8 mass%. When the polymer (A) contains the repeating unit (a8) in the above-mentioned ranges, the affinity of the polymer (A) for an electrolytic solution can be improved. Thus, the insertion and extraction of Li ions are facilitated, and hence the electrical storage device shows a satisfactory charge-discharge characteristic in some cases.

<Repeating Unit (a8) derived from Compound having Sulfonic Acid Group>

The polymer (A) may contain the repeating unit (a8) derived from a compound having a sulfonic acid group. The compound having a sulfonic acid group is not particularly limited, but examples thereof include compounds, such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, acrylamide tert-butylsulfonic acid, 2-hydroxy-3-acrylamidopropanesulfonic acid, and 3-allyloxy-2-hydroxypropanesulfonic acid, and alkali salts thereof, and one or more kinds selected therefrom may be used.

When the total of the repeating units in the polymer (A) is defined as 100 mass%, the content ratio of the repeating unit (a8) derived from the compound having a sulfonic acid group is preferably from 0 mass% to 10 mass%, more preferably from 1 mass% to 6 mass%. When the polymer (A) contains the repeating unit (a8) in the above-mentioned ranges, the dispersibility of an active material or a filler becomes satisfactory. Thus, it becomes possible to produce a uniform active material layer or protective film. Accordingly, a structural defect in the electrode plate of the electrical storage device is eliminated, and hence the device shows a satisfactory charge-discharge characteristic in some cases.

<Repeating Unit derived from Cationic Monomer>

The polymer (A) may contain the repeating unit derived from a cationic monomer. The cationic monomer is not particularly limited, but is preferably at least one kind of monomer selected from the group consisting of: a secondary amine (salt); a tertiary amine (salt); and a quaternary ammonium salt. Examples of the cationic monomer include, but not particularly limited to, 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylideneamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-yl)-N-methyl-1-naphthylmethylamine hydrochloride, and one or more kinds selected therefrom may be used.

1.1.2. Physical Properties of Polymer (A)

1.1.2.1. Dynamic Viscoelasticity

When the dynamic viscoelasticity of the polymer (A) is measured by the following measurement method, the tan$\delta$ (loss elastic modulus/storage elastic modulus) expresses only one peak top in the range of from -50°C to 0°C and one peak top in the range of from 50°C to 150°C.

A measurement sample in the dynamic viscoelasticity measurement is a film of the polymer (A). The film of the polymer (A) is obtained by drying the polymer (A) at 40°C for 24 hours to produce a uniform film having a thickness of 1.0 ±0.3 mm, drying the film in a vacuum dryer at 160°C for 30 minutes, and then cutting the resultant into a strip shape measuring 10 mm by 10 mm. Then, measurement is performed by using the following dynamic viscoelasticity-measuring apparatus with the measurement sample being fixed with parallel plates (product name: "PP-12") under the following measurement conditions in the temperature region of from -70°C to 180°C. From the obtained graph of the temperature dependency of the tan$\delta$ (loss elastic modulus/storage elastic modulus), a lower peak top temperature Tp1 (°C) and a higher peak top temperature Tp2 (°C) among peak top temperatures of the tan$\delta$ are each determined.

·Measurement conditions: shear mode, measurement frequency: 0.01 Hz to 1 Hz, temperature increase speed: 0.1°C/min
·Dynamic viscoelasticity-measuring apparatus: manufactured by Anton Paar, model: "MCR 301"

The lower peak top temperature Tp1 (°C) among the peak tops of the tan$\delta$ in the dynamic viscoelasticity measurement of the polymer (A) is present in the temperature range of preferably from -50°C to 0°C, more preferably from -48°C to -3°C, particularly preferably from -45°C to -5°C. The presence of one peak top in the above-mentioned temperature ranges indicates that the viscosity is high in those temperature ranges. It is conceived that, by virtue of the high viscosity, the high binding force of the polymer (A) in those temperature ranges can be maintained, and satisfactory adhesiveness can be expressed. Further, it is conceived that the flexibility of the electrode can also be improved, and an electrical storage device showing a satisfactory charge-discharge characteristic is obtained.

The higher peak top temperature $Tp2$ (°C) among the peak tops of the $\tan\delta$ in the dynamic viscoelasticity measurement of the polymer (A) is present in the temperature range of preferably from 50°C to 150°C, more preferably from 60°C to 145°C, particularly preferably from 70°C to 140°C. The presence of one peak top in the above-mentioned temperature ranges indicates that a polymer having uniformly crosslinked composition is formed in those temperature ranges. It is conceived that the high viscosity indicates a large uniformly crosslinked composition amount of the polymer (A) in those temperature ranges, and hence the hardness of the polymer (A) can be expressed to reduce an increase in internal resistance.

As a method of adjusting the peak top temperatures $Tp1$ and $Tp2$ of the $\tan\delta$, there is given, for example, a method involving adjusting monomer composition at the time of the polymerization of the polymer (A).

### 1.1.2.2. Electrolytic Solution Swelling Ratio

The swelling ratio (hereinafter sometimes referred to as "electrolytic solution swelling ratio") of the polymer (A) at the time of its immersion in the solvent, which is formed of propylene carbonate and diethyl carbonate at a volume fraction of 1:1, under the conditions of 70°C and 24 hours is preferably 120 mass% or more and 300 mass% or less, more preferably 130 mass% or more and 280 mass% or less, particularly preferably 140 mass% or more and 250 mass% or less. When the electrolytic solution swelling ratio of the polymer (A) falls within the above-mentioned ranges, the polymer (A) can absorb the electrolytic solution to moderately swell. As a result, a lithium ion that has undergone solvation can easily reach the active material. Further, when the electrolytic solution swelling ratio falls within the above-mentioned ranges, the coverage of the polymer (A) on the active material reduces, and hence the electrode resistance of the electrical storage device is effectively reduced. Thus, the device shows a satisfactory charge-discharge characteristic.

### 1.1.2.3. Number Average Particle Diameter

When the polymer (A) is present as particles, the number average particle diameter of the particles is preferably 50 nm or more and 500 nm or less, more preferably 60 nm or more and 450 nm or less, particularly preferably 70 nm or more and 400 nm or less. When the number average particle diameter of the particles of the polymer (A) falls within the above-mentioned ranges, the particles of the polymer (A) are easily adsorbed onto the surface of the active material, and hence the particles of the polymer (A) can also move following the movement of the active material. As a result, migration can be suppressed, and hence a degradation in electrical characteristic can be reduced in some cases. The number average particle diameter of the polymer (A) may be measured by a method described in Examples to be described later.

### 1.1.2.4. Surface Acidity

When the polymer (A) is present as particles, the surface acidity of the particles is preferably 0.05 mmol/g or more and 2 mmol/g or less, more preferably 0.1 mmol/g or more and 1.8 mmol/g or less, particularly preferably 0.15 mmol/g or more and 1.5 mmol/g or less. When the surface acidity of the particles of the polymer (A) falls within the above-mentioned ranges, a stable and homogeneous slurry can be produced. When the active material layer is produced by using such homogeneous slurry, an active material layer in which the active material and the particles of the polymer (A) are uniformly dispersed to suppress thickness variation is obtained. As a result, variation in charge-discharge characteristic in an electrode can be suppressed, and hence an electrical storage device showing a satisfactory charge-discharge characteristic is obtained. The surface acidity of the polymer (A) may be measured by a method described in Examples to be described later.

### 1.1.3. Method of producing Polymer (A)

<Polymerization Step>

A method of producing the polymer (A) is not particularly limited, but any method, such as a solution polymerization method, a suspension polymerization method, a bulk polymerization method, or an emulsion polymerization method, may be used. Any reaction of, for example, ion polymerization, radical polymerization, and living radical polymerization may be used as the polymerization reaction. A polymerization initiator to be used for the polymerization is, for example: an organic peroxide, such as lauroyl peroxide, diisopropyl peroxydicarbonate, di-2-ethylhexyl peroxydicarbonate, tert-butyl peroxypivalate, or 3,3,5-trimethylhexanoyl peroxide; an azo compound such as α,α'-azobisisobutyronitrile; or ammonium persulfate or potassium persulfate.

Of the above-mentioned polymerization methods, for example, an emulsion polymerization method performed in the presence of a known emulsifier, chain transfer agent, polymerization initiator, and the like is preferred.

Examples of the emulsifier to be used in the emulsion polymerization method may include: anionic surfactants, such as a sulfuric acid ester salt, an alkylbenzenesulfonic acid salt, an alkylnaphthalenesulfonic acid salt, an alkyl diphenyl ether disulfonic acid salt, an aliphatic sulfonic acid salt, an aliphatic carboxylic acid salt, and a dehydroabietic acid salt of a higher alcohol, a naphthalenesulfonic acid-formalin condensate, and a sulfuric acid ester salt of a nonionic surfactant; nonionic surfactants, such as an alkyl ester of polyethylene glycol, an alkyl phenyl ether of polyethylene glycol, and an alkyl ether of polyethylene glycol; and fluorine-based surfactants, such as a perfluorobutylsulfonic acid salt, a perfluoroalkyl group-containing phosphoric acid ester, a perfluoroalkyl group-containing carboxylic acid salt, and a perfluoroalkyl ethylene oxide adduct, and one or more kinds selected therefrom may be used.

Compounds described in JP 5999399 B2 and the like may be used as the chain transfer agent and the polymerization initiator to be used in the emulsion polymerization method.

The emulsion polymerization method for synthesizing the polymer (A) may be performed by one-stage polymerization, or may be performed by multistage polymerization involving two or more stages of polymerization.

When the synthesis of the polymer (A) is performed by one-stage polymerization, a mixture of the above-mentioned monomers may be subjected to emulsion polymerization in the presence of an appropriate emulsifier, chain transfer agent, polymerization initiator, and the like at preferably from 40°C to 80°C for preferably from 4 hours to 36 hours.

When the synthesis of the polymer (A) is performed by two-stage polymerization, the polymerization of each stage is preferably set as described below.

The use ratio of monomers to be used in the first stage polymerization is set to fall within preferably the range of from 20 mass% to 99 mass%, more preferably the range of from 25 mass% to 99 mass% with respect to the total mass of monomers (sum of the mass of the monomers to be used in the first stage polymerization and the mass of monomers to be used in the second stage polymerization). A case in which the first stage polymerization is performed at such use ratio of the monomers is preferred because, in this case, particles of the polymer (A), which are excellent in dispersion stability, and hence hardly cause an aggregate, can be obtained, and besides, an increase in viscosity of the binder composition for an electrical storage device over time is also suppressed.

The kinds and use ratio of the monomers to be used in the second stage polymerization may be the same as or different from the kinds and use ratio of the monomers to be used in the first stage polymerization.

Polymerization conditions in each stage are preferably set as described below from the viewpoint of the dispersibility of the particles of the polymer (A) to be obtained.

·First stage polymerization: a temperature of preferably from 40°C to 80°C; a polymerization time of preferably from 2 hours to 36 hours; and a polymerization conversion rate of preferably 50 mass% or more, more preferably 60 mass% or more.
·Second stage polymerization: a temperature of preferably from 40°C to 80°C; and a polymerization time of preferably from 2 hours to 18 hours.

When a total solid content concentration in the emulsion polymerization is set to 50 mass% or less, the polymerization reaction can be allowed to proceed under a state in which the dispersion stability of the particles of the polymer (A) to be obtained is satisfactory. The total solid content concentration is preferably 48 mass% or less, more preferably 45 mass% or less.

Irrespective of whether the synthesis of the polymer (A) is performed as one-stage polymerization or by a two-stage polymerization method, after the completion of the emulsion polymerization, a neutralizer is added to the polymerization mixture to adjust its pH to preferably from about 4.5 to about 10.5, more preferably from 5 to 10, still more preferably from 5.5 to 9.5. The neutralizer to be used in this case is not particularly limited, but examples thereof include: metal hydroxides, such as sodium hydroxide and potassium hydroxide; and ammonia. When the pH is set to fall within the above-mentioned ranges, the stability of the polymer (A) becomes satisfactory. When the polymerization mixture is subjected to neutralization treatment before being concentrated, its solid content concentration can be increased while satisfactory stability of the polymer (A) is maintained.

1.1.4. Content Ratio of Polymer (A)

The content ratio of the polymer (A) in the binder composition for an electrical storage device according to this embodiment is preferably from 10 mass% to 100 mass%, more preferably from 20 mass% to 95 mass%, particularly preferably from 25 mass% to 90 mass% in 100 mass% of a polymer component. Herein, the polymer component includes, in addition to the polymer (A), a polymer other than the polymer (A) and a thickener that are described later.

### 1.2. Liquid Medium (B)

The binder composition for an electrical storage device according to this embodiment includes the liquid medium (B). The liquid medium (B) is preferably an aqueous medium containing water, and is more preferably water. The aqueous medium may contain a non-aqueous medium other than water. Examples of the non-aqueous medium may include an amide compound, a hydrocarbon, an alcohol, a ketone, an ester, an amine compound, a lactone, a sulfoxide, and a sulfone compound, and one or more kinds selected therefrom may be used. When the binder composition for an electrical storage device according to this embodiment uses the aqueous medium as the liquid medium (B), the binder composition adversely affects an environment to a less degree and is highly safe for a worker who handles the binder composition.
The content ratio of the non-aqueous medium in the aqueous medium is preferably 10 mass% or less, more preferably 5 mass% or less in 100 mass% of the aqueous medium. It is particularly preferred that the aqueous medium be substantially free of the non-aqueous medium. Herein, the phrase "be substantially free" merely means that the non-aqueous medium is not intentionally added as the liquid medium, and the aqueous medium may contain the non-aqueous medium that is inevitably mixed during the preparation of the binder composition for an electrical storage device.

### 1.3. Other Additives

The binder composition for an electrical storage device according to this embodiment may include an additive other than the above-mentioned components as required. Examples of such additive include a polymer other than the polymer (A), a preservative, and a thickener.

### 1.3.1. Polymer other than Polymer (A)

The binder composition for an electrical storage device according to this embodiment may include a polymer other than the polymer (A). Such polymer is not particularly limited, but examples thereof include: an acrylic polymer containing an unsaturated carboxylic acid ester or a derivative thereof as a constituent unit; and a fluorine-based polymer such as polyvinylidene fluoride (PVDF). Those polymers may be used alone or in combination thereof. The incorporation of any such polymer further improves flexibility and adhesiveness in some cases.

### 1.3.2. Preservative

The binder composition for an electrical storage device according to this embodiment may include a preservative. The incorporation of the preservative can suppress the generation of foreign matter due to the growth of bacteria, mold, or the like during the storage of the binder composition for an electrical storage device in some cases. Specific examples of the preservative include compounds described in JP 5477610 B1.

### 1.3.3. Thickener

The binder composition for an electrical storage device according to this embodiment may include a thickener. The incorporation of the thickener can further improve the applicability of a slurry, the charge-discharge characteristic of an electrical storage device to be obtained, and the like in some cases.
Specific examples of the thickener may include: cellulose compounds, such as carboxymethyl cellulose, methyl cellulose, and hydroxypropyl cellulose; polysaccharides such as alginic acid; poly(meth)acrylic acid; ammonium salts or alkali metal salts of the cellulose compound or the poly(meth)acrylic acid; polyvinyl alcohol-based (co)polymers, such as polyvinyl alcohol, modified polyvinyl alcohol, and an ethylene-vinyl alcohol copolymer; and water-soluble polymers such as a saponified product of a copolymer of an unsaturated carboxylic acid, such as (meth)acrylic acid, maleic acid, or fumaric acid, and a vinyl ester. Of those, an alkali metal salt of carboxymethyl cellulose, an alkali metal salt of poly(meth) acrylic acid, and the like are preferred.
As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).
When the binder composition for an electrical storage device according to this embodiment includes the thickener, the content ratio of the thickener is preferably 5 mass% or less, more preferably from 0.1 mass% to 3 mass% with respect to 100 mass% of the total solid content of the binder composition for an electrical storage device.

1.4. pH of Binder Composition for Electrical Storage Device

The pH of the binder composition for an electrical storage device according to this embodiment is preferably from 4.5 to 10.5, more preferably from 5 to 10, particularly preferably from 5.5 to 9.5. When the pH falls within the above-mentioned ranges, the occurrence of a problem, such as lack of a leveling property or liquid dripping, can be suppressed. Thus, the production of an electrical storage device electrode achieving both of a satisfactory electrical characteristic and satisfactory adhesiveness is facilitated.

Herein, the "pH" refers to a physical property measured as described below: a value measured at 25°C in conformity to JIS Z8802:2011 with a pH meter using a glass electrode calibrated with a neutral phosphate standard solution and a borate standard solution serving as pH standard solutions. Examples of such pH meter include "HM-7J" manufactured by DKK-TOA Corporation and "D-51" manufactured by Horiba, Ltd.

It is not denied that the pH of the binder composition for an electrical storage device is affected by the composition of the constituent monomers of the polymer (A), but the pH is not determined by the monomer composition alone. That is, it is known that the pH of a binder composition for an electrical storage device generally varies depending on polymerization conditions and the like even for the same monomer composition, and Examples herein are merely some examples thereof.

For example, even for the same monomer composition, the case of loading all the unsaturated carboxylic acid into a polymerization reaction liquid at the beginning, and then sequentially adding the other monomers, and the case of loading the monomers other than the unsaturated carboxylic acid into a polymerization reaction liquid, and finally adding the unsaturated carboxylic acid give different amounts of carboxy groups derived from the unsaturated carboxylic acid exposed on the surface of the polymer to be obtained. Thus, it is conceived that the pH of the binder composition for an electrical storage device is significantly changed merely by changing the order in which the monomers are added in the polymerization method.

2. Slurry for Electrical Storage Device

A slurry for an electrical storage device according to an embodiment of the present invention includes the above-mentioned binder composition for an electrical storage device. The above-mentioned binder composition for an electrical storage device may be used as a material for producing a protective film for suppressing a short circuit due to dendrites generated along with charge and discharge, and may also be used as a material for producing an electrical storage device electrode (active material layer) improved in binding ability between the active materials and adhesive ability between the active material and a current collector, and in powder fall-off resistance. For this reason, the slurry for an electrical storage device for producing a protective film (hereinafter sometimes referred to as "slurry for a protective film"), and the slurry for an electrical storage device for producing the active material layer of an electrical storage device electrode (hereinafter sometimes referred to as "slurry for an electrical storage device electrode") are separately described.

2.1. Slurry for Protective Film

The "slurry for a protective film" refers to a dispersion to be used for producing a protective film on the surface of an electrode or a separator, or the surfaces of both thereof by being applied to the surface of the electrode or the separator, or the surfaces of both thereof, and then dried. The slurry for a protective film according to this embodiment may include only the above-mentioned binder composition for an electrical storage device, or may further include an inorganic filler. An example of the inorganic filler is an inorganic filler described in JP 2020-184461 A.

2.2. Slurry for Electrical Storage Device Electrode

The "slurry for an electrical storage device electrode" refers to a dispersion to be used for producing an active material layer on the surface of a current collector by being applied to the surface of the current collector and then dried. The slurry for an electrical storage device electrode according to this embodiment includes the above-mentioned binder composition for an electrical storage device, and an active material. The components that may be contained in the slurry for an electrical storage device electrode according to this embodiment are described below.

2.2.1. Polymer (A)

The composition, physical properties, production method, and the like of the polymer (A) are as described above, and hence the description thereof is omitted.

The content ratio of the polymer component in the slurry for an electrical storage device electrode according to this embodiment is preferably from 1 part by mass to 8 parts by mass, more preferably from 1 part by mass to 7 parts by mass, particularly preferably from 1.5 parts by mass to 6 parts by mass with respect to 100 parts by mass of the active material. When the content ratio of the polymer component falls within the above-mentioned ranges, the dispersibility of the active material in the slurry becomes satisfactory, and the applicability of the slurry also becomes excellent. Herein, the polymer component includes the polymer (A), and the polymer other than the polymer (A) and the thickener to be added as required.

2.2.2. Active Material

Examples of the active material to be used for the slurry for an electrical storage device electrode according to this embodiment include a positive electrode active material and a negative electrode active material. Specific examples thereof include a carbon material, a silicon material, an oxide containing a lithium atom, a sulfur compound, a lead compound, a tin compound, an arsenic compound, an antimony compound, an aluminum compound, a conductive polymer such as polyacene, a composite metal oxide represented by $A_X B_Y O_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10 > X > 0.05$, $4.00 > Y > 0.85$, and $5.00 > Z > 1.5$, respectively), and other metal oxides. Specific examples thereof include compounds described in JP 5999399 B2.

The slurry for an electrical storage device electrode according to this embodiment may be used in the production of any one of electrical storage device electrodes including a positive electrode and a negative electrode, but is particularly preferably used for the positive electrode.

A lithium ion secondary battery electrode produced by using the slurry for an electrical storage device electrode according to this embodiment can show a satisfactory electrical characteristic even in the case of using the oxide containing a lithium atom as the positive electrode active material. A conceivable reason therefor is that the polymer (A) can firmly bind the oxide containing a lithium atom, and at the same time, can maintain the state of firmly binding the oxide containing a lithium atom even during charge and discharge.

Examples of the oxide containing a lithium atom include one or more kinds selected from lithium atom-containing oxides (olivine-type lithium-containing phosphoric acid compounds) each of which is represented by the following general formula (1) and has an olivine-type crystal structure.

$$Li_{1-x}M_x(AO_4) \cdots \qquad (1)$$

In the formula (1), M represents an ion of at least one kind of metal selected from the group consisting of: Mg; Ti; V; Nb; Ta; Cr; Mn; Fe; Co; Ni; Cu; Zn; Al; Ga; Ge; and Sn, A represents at least one kind selected from the group consisting of: Si; S; P; and V, and "x" represents a number satisfying the relationship of $0 < x < 1$.

The value of "x" in the general formula (1) is selected in accordance with the valences of M and A so that the valence of the entirety of the general formula (1) may be zero-valent.

Examples of the olivine-type lithium-containing phosphoric acid compound include $LiFePO_4$, $LiCoPO_4$, $LiMnPO_4$, and $Li_{0.90}Ti_{0.05}Nb_{0.05}Fe_{0.30}Co_{0.30}Mn_{0.30}PO_4$. Of those, $LiFePO_4$ (lithium iron phosphate) is particularly preferred because an iron compound serving as a raw material therefor is easily available and inexpensive.

The average particle diameter of the olivine-type lithium-containing phosphoric acid compound preferably falls within the range of from 1 $\mu$m to 30 $\mu$m, more preferably falls within the range of from 1 $\mu$m to 25 $\mu$m, and particularly preferably falls within the range of from 1 $\mu$m to 20 $\mu$m.

In addition, active materials given as examples below may each be incorporated into the active material layer. The examples include: a conductive polymer such as polyacene; a composite metal oxide represented by $A_X B_Y O_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10 > X > 0.05$, $4.00 > Y > 0.85$, and $5.00 > Z > 1.5$, respectively); and other metal oxides.

Examples of the composite metal oxide include lithium cobaltate, lithium nickelate, lithium manganate, and ternary lithium nickel cobalt manganate.

An electrical storage device electrode produced by using the slurry for an electrical storage device electrode according to this embodiment can show a satisfactory electrical characteristic even in the case of using the oxide containing a lithium atom as the positive electrode active material. A conceivable reason therefor is that the polymer (A) can firmly bind the oxide containing a lithium atom, and at the same time, can maintain the state of firmly binding the oxide containing a lithium atom even during charge and discharge.

Meanwhile, when the negative electrode is produced, the slurry is preferably a mixture of the silicon material and the carbon material among the active materials given as examples above. The carbon material undergoes a smaller volume change along with charge and discharge than that of the silicon material, and hence, through use of the mixture of the silicon material and the carbon material as the negative electrode active material, the influence of the volume change of the silicon material can be alleviated. Accordingly, the adhesive ability between the active material layer and a current collector can be further improved.

2.2.3. Other Components

In addition to the above-mentioned components, other components may be added to the slurry for an electrical storage device electrode according to this embodiment as required. Examples of such components include a polymer other than the polymer (A), a thickener, a liquid medium, a conductive aid, a pH adjusting agent, a corrosion inhibitor, and a cellulose fiber. The polymer other than the polymer (A) and the thickener may be appropriately selected from the compounds given as examples in the "1.3. Other Additives" section, and may be used for similar purposes and at similar content ratios.

<Liquid Medium>

A liquid medium may be further added to the slurry for an electrical storage device electrode according to this embodiment in addition to the liquid medium included in the binder composition for an electrical storage device. The liquid medium to be added may be the same kind of liquid medium as the liquid medium (B) included in the binder composition for an electrical storage device, or may be different therefrom, but a liquid medium selected from the liquid media given as examples in the "1.2. Liquid Medium (B)" section is preferably used.

The content ratio of the liquid medium (including the liquid medium included in the binder composition for an electrical storage device) in the slurry for an electrical storage device electrode according to this embodiment is set to such a ratio that the solid content concentration in the slurry (which refers to the ratio of the total mass of the components other than the liquid medium in the slurry to the total mass of the slurry. The same applies hereinafter.) becomes preferably from 30 mass% to 70 mass%, more preferably from 40 mass% to 60 mass%.

<Conductive Aid>

A conductive aid may be further added to the slurry for an electrical storage device electrode according to this embodiment for the purposes of imparting conductivity and buffering the volume change of the active material caused by the entrance and exit of lithium ions.

Specific examples of the conductive aid include carbons, such as activated carbon, acetylene black, ketjen black, furnace black, graphite, a carbon fiber, fullerene, and a carbon nanotube. Of those, acetylene black or a carbon nanotube may be preferably used. The content ratio of the conductivity aid is preferably 20 parts by mass or less, more preferably from 1 part by mass to 15 parts by mass, particularly preferably from 2 parts by mass to 10 parts by mass with respect to 100 parts by mass of the active material.

<pH Adjusting Agent/Corrosion Inhibitor>

A pH adjusting agent and/or a corrosion inhibitor may be further added to the slurry for an electrical storage device electrode according to this embodiment for the purpose of suppressing the corrosion of a current collector depending on the kind of the active material.

Examples of the pH adjusting agent may include hydrochloric acid, phosphoric acid, sulfuric acid, acetic acid, formic acid, ammonium phosphate, ammonium sulfate, ammonium acetate, ammonium formate, ammonium chloride, sodium hydroxide, and potassium hydroxide. Of those, sulfuric acid, ammonium sulfate, sodium hydroxide, and potassium hydroxide are preferred. In addition, a pH adjusting agent selected from the neutralizers described in the production method for the polymer (A) may be used.

Examples of the corrosion inhibitor may include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Of those, ammonium paratungstate, ammonium metavanadate, sodium metavanadate, potassium metavanadate, and ammonium molybdate are preferred.

<Cellulose Fiber>

A cellulose fiber may be further added to the slurry for an electrical storage device electrode according to this embodiment. The addition of the cellulose fiber can improve the adhesiveness of the active material with respect to a current collector in some cases. It is conceived that the fibrous cellulose fiber fibrously binds the adjacent the active materials to each other by linear adhesion or linear contact, and thus can prevent the detachment of the active material and can also improve adhesiveness with respect to a current collector.

2.2.4. Preparation Method for Slurry for Electrical Storage Device Electrode

The slurry for an electrical storage device electrode according to this embodiment may be a slurry produced by any method as long as the slurry includes the above-mentioned binder composition for an electrical storage device and an active material. From the viewpoint of more efficiently and inexpensively producing a slurry having more satisfactory dispersibility and stability, the slurry is preferably produced by adding the active material and optionally added components to be used as required to the above-mentioned binder composition for an electrical storage device, and mixing the components. A specific example of the production method is a method described in JP 5999399 B2.

3. Electrical Storage Device Electrode

An electrical storage device electrode according to an embodiment of the present invention includes a current collector and an active material layer formed on the surface of the current collector by applying and drying the above-mentioned slurry for an electrical storage device electrode. Such electrical storage device electrode may be produced by applying the above-mentioned slurry for an electrical storage device electrode to the surface of the current collector such as metal foil to form a coating film, and then drying the coating film to form the active material layer. The thus produced electrical storage device electrode has the active material layer, which contains the above-mentioned polymer (A), active material, and optional components added as required, bound to the surface of the current collector. Accordingly, the electrode is excellent in adhesiveness and flexibility, and hence an electrical storage device excellent in cycle characteristic is obtained by reducing an increase in internal resistance.

The current collector is not particularly limited as long as the current collector is formed of a conductive material, but an example thereof is a current collector described in JP 5999399 B2.

4. Electrical Storage Device

An electrical storage device according to an embodiment of the present invention includes the above-mentioned electrical storage device electrode and further includes an electrolytic solution, and may be produced in accordance with a conventional method through use of parts such as a separator. A specific example of the production method may be a method involving: stacking together a negative electrode and a positive electrode via a separator; accommodating the stack in a battery container in a state of, for example, being wound or folded in accordance with a battery shape; injecting an electrolytic solution into the battery container; and sealing the battery container. The shape of the battery may be an appropriate shape, for example, a coin shape, a cylindrical shape, a square shape, or a laminate shape.

The electrolytic solution may be a liquid or a gel, and an electrolytic solution effectively expressing a function as a battery may be selected from known electrolytic solutions to be used for electrical storage devices depending on the kind of the active material. The electrolytic solution may be a solution obtained by dissolving an electrolyte in an appropriate solvent. Examples of such electrolyte and solvent include compounds described in JP 5999399 B2.

The above-mentioned electrical storage device may be applied to, for example, a lithium ion secondary battery, an electric double layer capacitor, and a lithium ion capacitor each of which needs to be discharged at a high current density. Of those, a lithium ion secondary battery is particularly preferred. In the electrical storage device electrode and the electrical storage device according to the above-mentioned embodiments, known members for lithium ion secondary batteries, for electric double layer capacitors, and for lithium ion capacitors may be used as members other than the binder composition for an electrical storage device.

5. Examples

The present invention is specifically described below by way of Examples, but the present invention is by no means limited to these Examples. The terms "part(s)" and "%" in Examples and Comparative Examples are by mass, unless otherwise stated.

5.1. Example 1

5.1.1. Preparation of Binder Composition for Electrical Storage Device

90 Parts by mass of water and 0.2 part by mass of sodium dodecylbenzenesulfonate were loaded into a separable flask having a volume of 7 liters, and 15 parts by mass of n-butyl acrylate (BA), 1 part by mass of allyl methacrylate (AMA), 5 parts by mass of styrene (ST) serving as monomers were sufficiently stirred together with the mixture to prepare a monomer emulsion containing the mixture of the above-mentioned monomers.

An increase in temperature in the separable flask was started, and at the time point when the internal temperature reached 60°C, 0.5 part by mass of ammonium persulfate was added as a polymerization initiator. After that, the temperature of the separable flask was increased to 70°C, and the polymerization was performed for 6 hours. After the recognition that the conversion rate exceeded 80%, 60 parts by mass of water and 0.3 part by mass of sodium dodecylbenzenesulfonate were loaded thereinto, and 1 part by mass of allyl methacrylate (AMA), 68 parts by mass of styrene (ST), 5 parts by mass of acrylic acid (AA), and 5 parts by mass of acrylonitrile (AN) serving as monomers were sufficiently stirred together with the mixture. The above-mentioned monomer emulsion containing the mixture of the monomers was slowly added to the flask over 3 hours. After that, the temperature in the separable flask was increased to 85°C, and while the temperature was maintained for 3 hours, a polymerization reaction was performed. 3 Hours thereafter, the separable flask was cooled to stop the reaction, and then an aqueous solution of sodium hydroxide was added to adjust the pH of the reaction product to 8.0. Thus, an aqueous dispersion containing 40 mass% of particles each formed of the polymer (A) was obtained.

5.1.2. Evaluations of Physical Properties of Polymer (A)

The dynamic viscoelasticity, electrolytic solution swelling ratio, pH, number average particle diameter, and surface acidity of the polymer (A) obtained in the foregoing were measured by the following methods. In the measurement of each of the pH, the number average particle diameter, and the surface acidity, the aqueous dispersion of the polymer (A) was used as a measurement sample. The results are shown in Table 1.

<Measurement of Dynamic Viscoelasticity>

The film of the polymer (A) was used as the measurement sample in the dynamic viscoelasticity measurement. The film of the polymer (A) is obtained by drying the polymer (A) at 40°C for 24 hours to produce a uniform film having a thickness of 1.0±0.3 mm, drying the film in a vacuum dryer at 160°C for 30 minutes, and then cutting the resultant into a strip shape measuring 10 mm by 10 mm. Then, measurement was performed by using the following dynamic viscoelasticity-measuring apparatus with the measurement sample being fixed with parallel plates (product name: "PP-12") under the following measurement conditions in the temperature region of from -70°C to 180°C. From the obtained graph of the temperature dependency of the $\tan\delta$ (loss elastic modulus/storage elastic modulus), the lower peak top temperature Tp1 (°C) and the higher peak top temperature Tp2 (°C) among the peak top temperatures of the $\tan\delta$ were each determined.

·Measurement conditions: shear mode, measurement frequency: 1 Hz, temperature increase speed: 5°C/min
·Dynamic viscoelasticity-measuring apparatus: manufactured by Anton Paar, model: "MCR 301"

<Measurement of Electrolytic Solution Swelling Ratio>

The polymer (A) obtained in the foregoing was dried in a thermostat at 40°C for 24 hours to produce a film. 1 Gram of the film was immersed in 20 mL of a mixed liquid formed of propylene carbonate (PC) and diethyl carbonate (DEC) (PC/DEC=1/1 (volume ratio); this mixed liquid is hereinafter referred to as "PC/DEC"), and the whole was left at rest at 70°C for 24 hours. Then, an insoluble content was separated by filtration through a wire mesh of 300 mesh, and then the PC/DEC of a soluble content was removed by evaporation. The weight (Y (g)) of the resultant residue was measured. In addition, the PC/DEC adhering to the surface of the insoluble content (film) separated by the above-mentioned filtration was removed through absorption by paper, and then the weight (Z (g)) of the insoluble content (film) was measured. An electrolytic solution swelling ratio was calculated by the following equation (2).

$$\text{Electrolytic solution swelling ratio (mass\%)} = (Z/(1-Y)) \times 100 \cdots (2)$$

<Measurement of pH>

The aqueous dispersion of the polymer (A) obtained in the foregoing was measured for its pH at 25°C with a pH meter (manufactured by Horiba, Ltd.).

<Measurement of Number Average Particle Diameter>

One droplet of latex obtained by diluting the aqueous dispersion of the polymer (A) obtained in the foregoing to 0.1 wt% was dropped onto a collodion support film with a pipette, and one droplet of a 1 wt% phosphotungstic acid solution was further dropped onto the collodion support film with a pipette, followed by air drying for 12 hours to prepare a sample. The thus prepared sample was observed with a transmission electron microscope (TEM, manufactured by Hitachi High-Technologies Corporation, model: "H-7650") at a magnification of 10K×. Image analysis was performed with the program of HITACHI EMIP, and the number average particle diameter of 50 randomly selected particles of the polymer (A) was calculated.

<Measurement of Surface Acidity>

The surface acidity of the particles of the polymer (A) obtained in the foregoing was measured as described below. First, it was recognized that 0.005 mol/L sulfuric acid was loaded into a reagent bottle in the upper portion of the main body of the titration burette of a potentiometric titrator (manufactured by Kyoto Electronics Manufacturing Co., Ltd., model: "AT-510"), and it was recognized that the conductivity of ultrapure water was 2 μS or less. Next, to remove air in the burette, purging was performed, and bubbles were removed from its nozzle. After that, about 1 g of the polymer (A) obtained in the foregoing in terms of solid content was collected in a 300-milliliter beaker, and its sample weight was recorded. Ultrapure water was added to the polymer to dilute the polymer to 200 mL, and then a 1 mol/L aqueous solution of sodium hydroxide was dropped thereinto. When the endpoint of the titration was reached, the mixture was stirred for about 30 seconds, and it was recognized that its conductivity became stable. The RESET button of the measurement program of the titrator was pressed to bring the titrator into a measurement standby state. The START button of the measurement program was pressed to start measurement with the 0.005 mol/L sulfuric acid. When the endpoint of the measurement is reached, the measurement is automatically ended, and a file is stored. Accordingly, the resultant curve was analyzed, and the surface acidity was determined from the used amount of the sulfuric acid by the following equation (3).

$$\text{Surface acidity (mmol/g)} = \text{amount [mL] of acid used in carboxylic acid areas on surfaces of particles} \times \text{concentration [mol/L] of acid} \times \text{degree of ionization/sample weight [g]}/1{,}000 \qquad (3)$$

5.1.3. Preparation of Slurry for Nonaqueous Secondary Battery Positive Electrode

2 Parts by mass (value in terms of solid content, added as the aqueous dispersion of the polymer (A) obtained in the foregoing) of the polymer (A), 100 parts by mass of NMC 622 (product name: "ME-8A", manufactured by Beijing Dangsheng Material Technology Co., Ltd.) serving as a positive electrode active material, 5 parts by mass of acetylene black, 1 part by mass of a thickener (product name: "CMC-2200", manufactured by Daicel Corporation), and 20 parts by mass of water were loaded into a twin-screw planetary mixer (manufactured by PRIMIX Corporation, product name: "T.K. HIVIS MIX 2P-03"), and were stirred at 60 rpm for 1 hour.
After that, the mixture was stirred for 1 hour to provide a paste. Water was added to the resultant paste to adjust its solid content concentration to 70%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum (about $5.0 \times 10^3$ Pa) at 1,800 rpm for 1.5 minutes. Thus, a slurry for a nonaqueous secondary battery positive electrode was prepared.

5.1.4. Production of Positive Electrode for Nonaqueous Secondary Battery and Evaluations of its Physical Properties

5.1.4.1. Production of Positive Electrode for Nonaqueous Secondary Battery

The slurry for a nonaqueous secondary battery positive electrode obtained in the foregoing was uniformly applied to the surface of a current collector formed of aluminum foil having a thickness of 20 μm by a doctor blade method so that its thickness after drying became 100 μm, followed by drying at 120°C for 20 minutes. After that, press working was performed with a roll pressing machine so that the density of the formed film (positive electrode active material layer) became 3.0 g/cm$^3$. Thus, a positive electrode for a nonaqueous secondary battery was obtained.

5.1.4.2. Evaluations of Physical Properties of Positive Electrode for Nonaqueous Secondary Battery

<Evaluation of Adhesive Strength>

In the surface of the positive electrode for a nonaqueous secondary battery obtained in the foregoing, ten cuts each having a depth extending from the active material layer to the current collector were made with a knife at intervals of 2 mm in each of longitudinal and latitudinal directions, to thereby make cuts in a grid shape. A pressure-sensitive adhesive tape having a width of 18 mm (manufactured by Nichiban Co., Ltd., product name: "Cellotape" (trademark), specified in JIS Z1522:2009) was attached to the cuts and immediately peeled off, and the degree of detachment of the active material was evaluated by visual judgment. Evaluation criteria are as described below. The evaluation results are shown in Table 1.

(Evaluation Criteria)

·Score 5: The number of detached pieces of the active material layer is 0.
·Score 4: The number of detached pieces of the active material layer is from 1 to 5.
·Score 3: The number of detached pieces of the active material layer is from 6 to 20.
·Score 2: The number of detached pieces of the active material layer is from 21 to 40.
·Score 1: The number of detached pieces of the active material layer is 41 or more.

<Evaluation of Winding Property>

The positive electrode for a nonaqueous secondary battery obtained in the foregoing was punched into a shape measuring 4 cm by 6 cm. The punched electrode was dried in a vacuum at 160°C for 6 hours. After that, the electrode was evaluated as follows: in a dry room, a crack of the electrode at the time of 180° bending was visually observed by a cylindrical mandrel method using 0.514-Type 1 Paint Film Bending Tester manufactured by Yasuda Seiki Seisakusho, Ltd. The diameters of the used mandrel are φ4 mm, φ5 mm, φ6 mm, φ8 mm, φ10 mm, φ12 mm, φ16 mm, φ20 mm, φ25 mm, and φ32 mm. The evaluation criteria are as described below. The evaluation results are shown in Table 1.

(Evaluation Criteria)

·Score 5: A crack of the electrode did not occur at a mandrel diameter of φ4 mm or less.
·Score 4: A crack of the electrode did not occur at a mandrel diameter of φ5 mm, and a crack of the electrode occurred at φ4 mm.
·Score 3: A crack of the electrode did not occur at a mandrel diameter of φ12 mm, and a crack of the electrode occurred at φ 10 mm.
·Score 2: A crack of the electrode did not occur at a mandrel diameter of φ25 mm, and a crack of the electrode occurred at φ20 mm.
·Score 1: A crack of the electrode occurred at a mandrel diameter of φ32 mm.

5.1.5. Production of Nonaqueous Secondary Battery and Evaluations of its Physical Properties

5.1.5.1. Preparation of Slurry for Nonaqueous Secondary Battery Negative Electrode and Production of Negative Electrode for Nonaqueous Secondary Battery

1 Part by mass (in terms of solid content) of a thickener (product name: "CMC-2200", manufactured by Daicel Corporation), 100 parts by mass (in terms of solid content) of graphite serving as a negative electrode active material, and 68 parts by mass of water were loaded into a twin-screw planetary mixer (manufactured by PRIMIX Corporation, product name: "T.K. HIVIS MIX 2P-03"), and were stirred at 60 rpm for 1 hour.

Next, a SBR (product name: "TRD105A", manufactured by ENEOS Materials Corporation) was added in an amount corresponding to 2 parts by mass (in terms of solid content) to the mixture, and the whole was further stirred for 1 hour to provide a paste. Water was loaded into the resultant paste to adjust its solid content concentration to 50%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum at 1,800 rpm for 1.5 minutes. Thus, a slurry for a nonaqueous secondary battery negative electrode was prepared.

Next, the slurry for a nonaqueous secondary battery negative electrode prepared in the foregoing was uniformly applied to the surface of a current collector formed of copper foil having a thickness of 20 μm by a doctor blade method so that its thickness after drying became 80 μm, followed by drying treatment at 120°C for 20 minutes. After that, press working was performed with a roll pressing machine so that the density of the formed film (negative electrode active material layer) became 1.9 g/cm$^3$. Thus, a negative electrode for a nonaqueous secondary battery was obtained.

5.1.5.2. Assembly of Nonaqueous Secondary Battery (Lithium Ion Battery)

In a glove box in which Ar purging had been performed so that the dew point was -80°C or less, the negative electrode for a nonaqueous secondary battery produced in the foregoing that had been punch-molded into a circular shape having a diameter of 16.16 mm was mounted on a bipolar coin cell (manufactured by Hohsen Corp., product name: "HS Flat Cell").

Next, a separator (manufactured by Celgard LLC, product name: "CELGARD #2400") formed of a polypropylene-made porous membrane punched into a circular shape having a diameter of 24 mm was superimposed and mounted on the negative electrode for a nonaqueous secondary battery.

Further, 500 μL of an electrolytic solution was injected into the laminate so that air did not enter. After that, the positive electrode for a nonaqueous secondary battery produced in the foregoing that had been punch-molded into a circular shape having a diameter of 15.95 mm was superimposed and mounted on the separator, and the exterior body of the bipolar coin cell was sealed by tightening its screws. Thus, a lithium ion battery cell (an example of a nonaqueous secondary battery) was assembled. The electrolytic solution used here is a solution obtained by dissolving $LiPF_6$ at a concentration of 1 mol/L in a solvent containing ethylene carbonate and ethyl methyl carbonate at 1/1 (mass ratio).

5.1.5.3. Evaluations of Physical Properties of Nonaqueous Secondary Battery

<Evaluation of Cycle Characteristic>

For the nonaqueous secondary battery produced in the foregoing, in a thermostat controlled to a temperature of 25°C, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 100 times. A capacity retention ratio was calculated by the following equation (4) and evaluated by the following criteria. The evaluation results are shown in Table 1.

Capacity retention ratio (%)=(discharge capacity in 100th cycle)/(discharge capacity in 1st cycle)×100           (4)

(Evaluation Criteria)

  ·Score 5: The capacity retention ratio is 95% or more.
  ·Score 4: The capacity retention ratio is 90% or more and less than 95%.
  ·Score 3: The capacity retention ratio is 85% or more and less than 90%.
  ·Score 2: The capacity retention ratio is 80% or more and less than 85%.
  ·Score 1: The capacity retention ratio is 75% or more and less than 80%.
  ·Score 0: The capacity retention ratio is less than 75%.

<Evaluation of Resistance Increase Rate>

For the nonaqueous secondary battery produced in the foregoing, in a thermostat controlled to a temperature of 25°C, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (0.05C). The time point when the voltage reached 3.0 V was defined as discharge completion (cut-off), and a discharge capacity in the 0th cycle was calculated. Further, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 100 times. After charge and discharge had been repeated 100 times, charge and discharge were performed in the same manner as in the 0th cycle, and a discharge capacity in the 101st cycle was evaluated. A resistance increase rate was calculated by the following equation (5) and evaluated by the following criteria.

$$\text{Resistance increase rate } (\%)$$

$$=(\text{discharge capacity in 101st cycle}-\text{discharge capacity in 100th cycle})/(\text{discharge capacity in 0th cycle}-\text{discharge capacity in 1st cycle})\times100\cdots(5)$$

(Evaluation Criteria)

·Score 5: The resistance increase rate is 100% or more and less than 110%.
·Score 4: The resistance increase rate is 110% or more and less than 120%.
·Score 3: The resistance increase rate is 120% or more and less than 130%.
·Score 2: The resistance increase rate is 130% or more and less than 140%.
·Score 1: The resistance increase rate is 140% or more and less than 150%.
·Score 0: The resistance increase rate is 150% or more.

In the measurement conditions, "1C" refers to a current value at which discharge is completed in 1 hour when a cell having a certain electric capacity is subjected to constant-current discharge. For example, "0.1C" refers to a current value at which discharge is completed in 10 hours, and "10C" refers to a current value at which discharge is completed in 0.1 hour.

5.2. Examples 2 to 11 and Comparative Examples 1 to 6

Aqueous dispersions each containing 40 mass% of polymer particles were each obtained in the same manner as in the "5.1.1. Preparation of Binder Composition for Electrical Storage Device" section except that the kinds and amounts of the respective monomers were set as shown in Table 1 or Table 2. Slurries for electrical storage device electrodes were each prepared, and electrical storage device electrodes and electrical storage devices were each produced, in the same manner as in Example 1 except the foregoing, followed by their evaluations in the same manner as in Example 1.

5.3. Examples 12 to 16 and Comparative Examples 7 to 9

Slurries for nonaqueous secondary battery positive electrodes were each prepared, and electrical storage device electrodes and electrical storage devices were each produced, in the same manner as in Example 1 above except that in the "5.1.3. Preparation of Slurry for Nonaqueous Secondary Battery Positive Electrode" section, the content ratios of the polymer, the CMC (product name: "CMC-2200", manufactured by Daicel Corporation), and alginic acid (product name: "Sodium Alginate 80-120", manufactured by FUJIFILM Wako Pure Chemical Corporation) were set as shown in Table 3, followed by their evaluations in the same manner as in Example 1 above. The results are shown in Table 3.

5.4. Examples 17 and 18

Slurries for nonaqueous secondary battery negative electrodes were each prepared, and electrical storage device electrodes and electrical storage devices were each produced, in the same manner as in Example 1 above except that in the "5.1.5.1. Preparation of Slurry for Nonaqueous Secondary Battery Negative Electrode and Production of Negative Electrode for Nonaqueous Secondary Battery" section, the content ratios of the polymer and the CMC (product name: "CMC-2200", manufactured by Daicel Corporation) were set as shown in Table 4, followed by their evaluations in the same manner as in Example 1 above. The results are shown in Table 4.

5.5. Evaluation Results

The compositions of the binder compositions for electrical storage devices, and the results of the physical property evaluations of the polymer and the characteristic evaluations of the electrical storage device electrodes and the electrical storage devices are shown in Tables 1 to 4.

Table 1

| Polymer composition | | | Example | | | | | | | | | | |
| --- | --- | --- | --- | --- | --- | --- | --- | --- | --- | --- | --- | --- | --- |
| Classification | Compound name | Monomer name | 1 | 2 | 3 | 4 | 5 | 6 | 7 | 8 | 9 | 10 | 11 |
| First stage (a1) | Unsaturated carboxylic acid ester having aliphatic hydrocarbon group | 2EHA | | 43 | | 15 | 18 | 15 | 10 | 30 | | 20 | 21 |
| | | BA | 15 | | 10 | 5 | | 5 | 15 | | 36 | 6 | |
| | | BMA | | | | | 2 | | | | | | |
| | | MMA | | 1 | | | | | | | | | |
| | | EA | | | 5 | | | | | | | | |
| (a2) | Aromatic vinyl compound | ST | 5 | 4 | 4 | 10 | 5 | 3 | 2 | 5 | 10 | 15 | 2 |
| | | DVB | | 1 | 1 | | | | 1 | | | | |
| (a3) | Unsaturated carboxylic acid | TA | | | | | 2 | 1 | | | | | |
| | | AA | | | | | 2 | 1 | | | | | |
| | | MAA | | | | | | 1 | | | | | |
| (a4) | Polyfunctional (meth)acrylic acid ester | EDMA | | | | | 1 | 1 | | 1 | | 1 | 1 |
| | | AMA | 1 | | | 1 | 1 | | 2 | | | | |
| (a5) | Other unsaturated carboxylic acid ester | HEMA | | | | | | | 1 | | | | |
| | | HEA | | | | | | | | | | | |
| | | GLM | | | | | | | | | | | |
| (a6) | (Meth)acrylamide | AAM | | | | | | | 1 | | | | |
| | | MAM | | | | | | | 1 | | | | |
| (a7) | α,β-Unsaturated nitrile compound | AN | | | | | | 5 | | 10 | 4 | | |
| (a8) | Compound having sulfonic acid group | NASS | | | | 4.9 | | | | | | | |
| | Unsaturated carboxylic acid ester having alicyclic hydrocarbon group | CHMA | | | | | | | | | | | 10 |
| | | CHA | | | | | | | | | | | |
| Total amount | Total amount of monomer (a1) | | 15 | 44 | 15 | 20 | 20 | 20 | 25 | 30 | 36 | 26 | 21 |
| | Total amount of monomer (a2) | | 5 | 5 | 5 | 10 | 5 | 3 | 3 | 5 | 10 | 15 | 2 |
| | Total amount of first stage monomers | | 21 | 49 | 20 | 35.9 | 31 | 32 | 33 | 46 | 50 | 42 | 24 |

EP 4 589 692 A1

20

(continued)

| Second stage | Polymer composition | | | Example | | | | | | | | | | |
|---|---|---|---|---|---|---|---|---|---|---|---|---|---|---|
| | Classification | Compound name | Monomer name | 1 | 2 | 3 | 4 | 5 | 6 | 7 | 8 | 9 | 10 | 11 |
| | (a1) | Unsaturated carboxylic acid ester having aliphatic hydrocarbon group | 2EHA | | | | | | 5 | | | 1 | | 5 |
| | | | BA | | 10 | | | | | | | | | |
| | | | BMA | | 5 | | | | | | | 1 | | |
| | | | MMA | | | | 5 | | | | | 1 | | |
| | | | EA | | 5 | | | | | | | 1 | | |
| | (a2) | Aromatic vinyl compound | ST | 68 | 30 | 79 | 43 | 58 | 44 | 52 | 52 | 40 | 48 | 56 |
| | | | DVB | | | | | 1 | | 1 | | | 1 | |
| | (a3) | Unsaturated carboxylic acid | TA | | | | 0.1 | | 3 | 3 | 1 | | | 1 |
| | | | AA | 5 | 1 | 1 | | | 3 | 3 | | 1 | 1 | 1 |
| | | | MAA | | | | | 6 | 3 | 2 | | | 2 | 1 |
| | (a4) | Polyfunctional (meth)acrylic acid ester | EDMA | | | | 1 | | | 1 | | | | |
| | | | AMA | 1 | | | | 1 | 1 | 1 | 1 | | 1 | 1 |
| | (a5) | Other unsaturated carboxylic acid ester | HEMA | | | | | 1 | | | | | | 1 |
| | | | HEA | | | | | 1 | | | | | | |
| | | | GLM | | | | | 1 | | | | | | |
| | (a6) | (Meth)acrylamide | AAM | | | | | | | 2 | | | | |
| | | | MAM | | | | | | | 2 | | | | |
| | (a7) | α,β-Unsaturated nitrile compound | AN | 5 | | | 10 | | | | | | | |
| | (a8) | Compound having sulfonic acid group | NASS | | | | 5 | | 9 | | | | | |
| | | Unsaturated carboxylic acid ester having alicyclic hydrocarbon group | CHMA | | | | | | | | | | | |
| | | | CHA | | | | | | | | | 5 | | |
| | Total amount | | Total amount of monomer (a1) | 0 | 20 | 0 | 5 | 0 | 5 | 0 | 0 | 4 | 0 | 5 |
| | | | Total amount of monomer (a2) | 68 | 30 | 79 | 43 | 59 | 44 | 53 | 52 | 40 | 49 | 56 |
| | | | Total amount of second stage monomers | 79 | 51 | 80 | 64.1 | 69 | 68 | 67 | 54 | 50 | 53 | 66 |

| Polymer composition | | | Example | | | | | | | | | | |
|---|---|---|---|---|---|---|---|---|---|---|---|---|---|
| Classification | Compound name | Monomer name | 1 | 2 | 3 | 4 | 5 | 6 | 7 | 8 | 9 | 10 | 11 |
| Physical property evaluation | pH | | 8 | 7.5 | 7 | 9.5 | 6 | 5.5 | 9.5 | 8.5 | 9 | 8.5 | 8 |
| | Tp1 (°C) | | 0 | -50 | -13 | -10 | -35 | -26 | -43 | -21 | -7 | -3 | -11 |
| | Tp2 (°C) | | 96 | 50 | 116 | 129 | 150 | 85 | 143 | 113 | 102 | 106 | 67 |
| | Electrolytic solution swelling ratio (mass%) | | 210 | 175 | 190 | 265 | 136 | 230 | 120 | 300 | 350 | 145 | 152 |
| | Surface acidity (mmol/g) | | 1 | 0.2 | 0.3 | 0.05 | 2 | 2.3 | 1.5 | 0.5 | 0.3 | 0.7 | 0.7 |
| | Number average particle diameter (nm) | | 200 | 250 | 350 | 500 | 50 | 100 | 150 | 250 | 400 | 200 | 300 |
| Characteristic evaluation | Adhesiveness strength | | 4 | 5 | 5 | 5 | 4 | 3 | 4 | 5 | 4 | 3 | 3 |
| | Winding property of electrode | | 3 | 5 | 4 | 4 | 5 | 5 | 5 | 5 | 4 | 3 | 3 |
| | Resistance increase ratio | | 5 | 3 | 5 | 5 | 5 | 4 | 5 | 4 | 4 | 3 | 3 |
| | Cycle characteristic | | 4 | 5 | 5 | 4 | 5 | 4 | 5 | 4 | 3 | 3 | 3 |

EP 4 589 692 A1

Table 2

| | | | | Comparative Example | | | | | |
|---|---|---|---|---|---|---|---|---|---|
| | | Polymer composition | | 1 | 2 | 3 | 4 | 5 | 6 |
| | Classification | Compound name | Monomer name | | | | | | |
| First stage | (a1) | Unsaturated carboxylic acid ester having aliphatic hydrocarbon group | 2EHA | 5 | 66 | | 16 | 5 | 29 |
| | | | BA | 5 | | 12 | 2 | 15 | |
| | | | BMA | | | | | | |
| | | | MMA | | | | | | |
| | | | EA | | | | | | |
| | (a2) | Aromatic vinyl compound | ST | 10 | 2 | 1 | 10 | 3 | |
| | | | DVB | | | | | | |
| | (a3) | Unsaturated carboxylic acid | TA | | | | 3 | | |
| | | | AA | | | | | | |
| | | | MAA | | | | | 4 | |
| | (a4) | Polyfunctional (meth)acrylic acid ester | EDMA | 1 | | | | | |
| | | | AMA | 1 | 1 | | | | 1 |
| | (a5) | Other unsaturated carboxylic acid ester | HEMA | | | | 2 | | |
| | | | HEA | | | | | | |
| | | | GLM | | | | | | |
| | (a6) | (Meth)acrylamide | AAM | | | | | | |
| | | | MAM | | | | | | |
| | (a7) | α,β-Unsaturated nitrile compound | AN | | | | | | |
| | (a8) | Compound having sulfonic acid group | NASS | | | | | | |
| | | Unsaturated carboxylic acid ester having alicyclic hydrocarbon group | CHMA | | | | | | 17 |
| | | | CHA | | | | | | |
| | Total amount | Total amount of monomer (a1) | | 10 | 66 | 12 | 18 | 20 | 29 |
| | | Total amount of monomer (a2) | | 10 | 2 | 1 | 10 | 3 | 0 |
| | | Total amount of first stage monomers | | 22 | 69 | 13 | 33 | 27 | 47 |
| Second stage | (a1) | Unsaturated carboxylic acid ester having aliphatic hydrocarbon group | 2EHA | | | | 20 | | |
| | | | BA | | | | 5 | | |
| | | | BMA | | | | | | |
| | | | MMA | | | | 5 | | |
| | | | EA | | | | 5 | | |
| | (a2) | Aromatic vinyl compound | ST | 65 | 30 | 83 | 29 | 47 | |
| | | | DVB | | | 2 | 1 | | |
| | (a3) | Unsaturated carboxylic acid | TA | 2 | 1 | 1 | | | |
| | | | AA | 1 | | | 2 | 1 | 3 |
| | | | MAA | 2 | | 1 | | 5 | |

(continued)

| | Polymer composition | | | Comparative Example | | | | | |
|---|---|---|---|---|---|---|---|---|---|
| | Classification | Compound name | Monomer name | 1 | 2 | 3 | 4 | 5 | 6 |
| | (a4) | Polyfunctional (meth)acrylic acid ester | EDMA | | | | | | |
| | | | AMA | | | | | 1 | |
| | (a5) | Other unsaturated carboxylic acid ester | HEMA | | | | | | |
| | | | HEA | | | | | | |
| | | | GLM | | | | | | |
| | (a6) | (Meth)acrylamide | AAM | | | | | 2 | |
| | | | MAM | | | | | 2 | |
| | (a7) | $\alpha,\beta$-Unsaturated nitrile compound | AN | 5 | | | | 10 | |
| | (a8) | Compound having sulfonic acid group | NASS | 3 | | | | 5 | |
| | | Unsaturated carboxylic acid ester having alicyclic hydrocarbon group | CHMA | | | | | | 50 |
| | | | CHA | | | | | | |
| | Total amount | Total amount of monomer (a1) | | 0 | 0 | 0 | 35 | 0 | 0 |
| | | Total amount of monomer (a2) | | 65 | 30 | 85 | 30 | 47 | 0 |
| | | Total amount of second stage monomers | | 78 | 31 | 87 | 67 | 73 | 53 |
| Physical property evaluation | | pH | | 8 | 8.5 | 7.5 | 7 | 9 | 8 |
| | | Tp1 (°C) | | 9 | -58 | -39 | -14 | -45 | -11 |
| | | Tp2 (°C) | | 108 | 95 | 110 | 45 | 153 | 110 |
| | | Electrolytic solution swelling ratio (mass%) | | 220 | 200 | 140 | 180 | 260 | 190 |
| | | Surface acidity (mmol/g) | | 1.2 | 0.2 | 0.5 | 1.1 | 1.9 | 0.6 |
| | | Number average particle diameter (nm) | | 150 | 250 | 200 | 300 | 250 | 150 |
| Characteristic evaluation | | Adhesiveness strength | | 1 | 3 | 3 | 1 | 1 | 1 |
| | | Winding property of electrode | | 1 | 2 | 2 | 2 | 1 | 1 |
| | | Resistance increase ratio | | 2 | 1 | 2 | 1 | 3 | 1 |
| | | Cycle characteristic | | 1 | 2 | 2 | 1 | 2 | 1 |

The abbreviations of the respective monomers in Table 1 and Table 2 represent the following monomers.

<Unsaturated Carboxylic Acid Ester having Aliphatic Hydrocarbon Group>

·2EHA: 2-ethylhexyl acrylate
·BA: n-butyl acrylate
·BMA: n-butyl methacrylate
·MMA: methyl methacrylate
·EA: ethyl acrylate

<Aromatic Vinyl Compound>

·ST: styrene

·DVB: divinylbenzene

<Unsaturated Carboxylic Acid>

·TA: itaconic acid
·AA: acrylic acid
·MAA: methacrylic acid

<Polyfunctional (Meth)acrylic Acid Ester>

·EDMA: ethylene glycol dimethacrylate
·AMA: allyl methacrylate

<Other Unsaturated Carboxylic Acid Ester>

·HEMA: 2-hydroxyethyl methacrylate
·HEA: 2-hydroxyethyl acrylate
·GLM: glycerin monomethacrylate

<(Meth)acrylamide>

·AAM: acrylamide
·MAM: methacrylamide

<$\alpha,\beta$-Unsaturated Nitrile Compound>

·AN: acrylonitrile

<Compound having Sulfonic Acid Group>

·NASS: sodium styrenesulfonate

<Unsaturated Carboxylic Acid Ester having Alicyclic Hydrocarbon Group>

·CHMA: cyclohexyl methacrylate

·CHA: cyclohexyl acrylate

Table 3

| | | | Example | | | | | | Comparative Example | | | |
|---|---|---|---|---|---|---|---|---|---|---|---|---|
| | | 6 | 12 | 13 | 14 | 15 | 16 | 1 | 7 | 8 | 9 |
| Polymer (part(s) by mass) | Example 6 | 2 | 2 | 2 | 2 | 4 | 4 | | | | |
| | Comparative Example 1 | | | | | | | 2 | 2 | | |
| | Comparative Example 6 | | | | | | | | | 4 | 2 |
| Thickener (part(s) by mass) | CMC | 1 | 2 | | 1 | 2 | 4 | 1 | 2 | | 1 |
| | Alginic acid | | | 2 | 1 | | | | | 2 | 1 |
| Characteristic evaluation | Adhesiveness strength | 3 | 4 | 4 | 4 | 4 | 3 | 1 | 2 | 3 | 2 |
| | Winding property of electrode | 5 | 5 | 5 | 5 | 5 | 4 | 1 | 1 | 3 | 1 |
| | Resistance increase ratio | 4 | 5 | 5 | 5 | 5 | 5 | 2 | 2 | 1 | 2 |
| | Cycle characteristic | 4 | 5 | 5 | 5 | 5 | 5 | 1 | 2 | 2 | 2 |

Table 4

| Negative electrode, graphite | | Example | |
|---|---|---|---|
| | | 17 | 18 |
| Polymer (part(s) by mass) | SBR | 2 | |
| | Example 5 | | 2 |
| Thickener (part(s) by mass) | CMC | 1 | 1 |
| Characteristic evaluation | Adhesiveness strength | 4 | 4 |
| | Resistance increase ratio | 3 | 5 |
| | Cycle characteristic | 5 | 4 |

As is apparent from Table 1 above and Table 2 above, it was found that, as compared to the cases of Comparative Examples 1 to 6, the slurries for electrical storage device electrodes prepared by using the binder compositions for electrical storage devices according to the present invention shown in Examples 1 to 11 were each able to produce an electrical storage device electrode excellent in adhesiveness and flexibility, and to improve a cycle characteristic by reducing an increase in internal resistance of the electrical storage device. A conceivable reason for this is as described below. When the temperature Tp1 of the polymer (A) contained in the binder composition for an electrical storage device of each of Examples 1 to 11 shown in Table 1 above fell within the range of from -50°C to 0°C, the binder composition for an electrical storage device itself expressed flexibility, and as a result, satisfactory adhesive strength and the flexibility of the electrode were shown. In addition, when the temperature Tp2 of the polymer (A) fell within the range of from 50°C to 150°C, fusion between particles was suppressed to suppress the coverage of the polymer on the active material, and hence the insertion and extraction of lithium ions were facilitated. Thus, the resistance of the electrode was able to be reduced without inhibition of the permeability of the electrolytic solution between the active materials. The electrode was able to show satisfactory adhesive strength and flexibility, and a reduction in resistance, and as a result, the electrode presumably showed a satisfactory charge-discharge characteristic.

As is apparent from the results of Table 3 above, it is understood that according to the slurry for a nonaqueous secondary battery positive electrode according to the present invention using the polymer (A) and the thickener in combination, the active materials can be more suitably bound to each other, and moreover, adhesiveness between the active material layer and the current collector can be satisfactorily maintained. In particular, it is found that the slurry for a nonaqueous secondary battery positive electrode shown in Example 13 can suitably bind the active materials to each other, and moreover, can satisfactorily maintain adhesiveness between the active material layer and the current collector even when alginic acid is used in combination as the thickener.

As is apparent from the results of Table 4 above, the slurry for a nonaqueous secondary battery negative electrode according to the present invention described in Example 18 showed satisfactory results even when the negative electrode active material was used. The resultant electrical storage device showed a satisfactory charge-discharge characteristic probably because the electrolytic solution affinity of the polymer in the slurry was improved, and hence the insertion and extraction of Li ions into and from the negative electrode active material were facilitated to reduce the resistance of the device.

The present invention is not limited to the embodiments described above, and various modifications may be made thereto. The present invention encompasses substantially the same configurations as the configurations described in the embodiments (e.g., configurations having the same functions, methods, and results, or configurations having the same objects and effects). The present invention also encompasses configurations obtained by replacing non-essential parts of the configurations described in the embodiments with other configurations. The present invention also encompasses configurations exhibiting the same actions and effects or configurations capable of achieving the same objects as those of the configurations described in the embodiments. The present invention also encompasses configurations obtained by adding known technologies to the configurations described in the embodiments.

**Claims**

1.   A binder composition for an electrical storage device, comprising:

a polymer (A); and
a liquid medium (B),
wherein when a total of repeating units in the polymer (A) is defined as 100 mass%, the polymer (A) contains

15 mass% to 64 mass% of a repeating unit (a1) derived from an unsaturated carboxylic acid ester having an aliphatic hydrocarbon group (except an unsaturated carboxylic acid ester having an alicyclic hydrocarbon group), and

35 mass% to 84 mass% of a repeating unit (a2) derived from an aromatic vinyl compound, and

wherein $\tan\delta$ (loss elastic modulus/storage elastic modulus) in dynamic viscoelasticity of the polymer (A) expresses only one peak top in a range of from -50°C to 0°C and one peak top in a range of from 50°C to 150°C.

2. The binder composition for an electrical storage device according to claim 1, wherein the polymer (A) further contains 0.1 mass% to 10 mass% of a repeating unit (a3) derived from an unsaturated carboxylic acid.

3. The binder composition for an electrical storage device according to claim 1, wherein the polymer (A) has an electrolytic solution swelling ratio of 120 mass% or more and 300 mass% or less when the polymer (A) is immersed in a solvent formed of propylene carbonate and diethyl carbonate at a volume ratio of 1:1 under conditions of 70°C and 24 hours.

4. The binder composition for an electrical storage device according to claim 1,

wherein the polymer (A) is polymer particles, and
wherein the polymer particles have a number average particle diameter of 50 nm or more and 500 nm or less.

5. The binder composition for an electrical storage device according to claim 4, wherein the polymer particles have a surface acidity of 0.05 mmol/g or more and 2 mmol/g or less.

6. A slurry for an electrical storage device electrode, comprising:

the binder composition for an electrical storage device of any one of claims 1 to 5; and
an active material.

7. The slurry for an electrical storage device electrode according to claim 6, wherein the slurry for an electrical storage device electrode comprises, as the active material, at least one kind selected from the group consisting of: an olivine-type lithium-containing phosphoric acid compound; lithium cobaltate; lithium nickelate; lithium manganate; and ternary lithium nickel cobalt manganate.

8. The slurry for an electrical storage device electrode according to claim 6, wherein the slurry for an electrical storage device electrode comprises, as the active material, a carbon material.

9. An electrical storage device electrode, comprising:

a current collector; and
an active material layer formed on a surface of the current collector by applying and drying the slurry for an electrical storage device electrode of claim 6.

10. An electrical storage device, comprising the electrical storage device electrode of claim 9.

## INTERNATIONAL SEARCH REPORT

| International application No. |
|---|
| **PCT/JP2023/032795** |

### A. CLASSIFICATION OF SUBJECT MATTER

***H01M 4/62***(2006.01)i; ***H01G 11/06***(2013.01)i; ***H01G 11/38***(2013.01)i; ***H01M 4/13***(2010.01)i; ***H01M 4/139***(2010.01)i; ***H01M 4/505***(2010.01)i; ***H01M 4/525***(2010.01)i; ***H01M 4/58***(2010.01)i; ***H01M 4/587***(2010.01)i
FI:   H01M4/62 Z; H01M4/139; H01M4/505; H01M4/525; H01M4/58; H01M4/587; H01M4/13; H01G11/06; H01G11/38

According to International Patent Classification (IPC) or to both national classification and IPC

### B. FIELDS SEARCHED

Minimum documentation searched (classification system followed by classification symbols)

H01M4/00-4/62; H01M10/05-10/0587; H01G11/00-11/86; H01M6/00-6/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2008/044546 A1 (KURARAY CO., LTD.) 17 April 2008 (2008-04-17) claim 1, paragraphs [0074], [0085], reference example 3, reference measurement example 3, tables 1-2, 5 | 1-2, 6-10 |
| A | JP 2011-154981 A (NIPPON A&L INC.) 11 August 2011 (2011-08-11) | 1-10 |
| A | JP 2014-26962 A (JSR CORP.) 06 February 2014 (2014-02-06) | 1-10 |
| A | KR 10-2019-0029320 A (LG CHEM, LTD.) 20 March 2019 (2019-03-20) | 1-10 |
| A | WO 2022/039002 A1 (JSR CORP.) 24 February 2022 (2022-02-24) | 1-10 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/032795**

| Patent document cited in search report | | | Publication date (day/month/year) | Patent family member(s) | | | Publication date (day/month/year) |
|---|---|---|---|---|---|---|---|
| WO | 2008/044546 | A1 | 17 April 2008 | US | 2010/0035158 | A1 | |
| | | | | claim 1, paragraphs [0084], [0104], referential example 3, reference measurement example 3, tables 1-2, 5 | | | |
| | | | | EP | 2071584 | A1 | |
| | | | | KR | 10-2009-0058544 | A | |
| | | | | CN | 101536114 | A | |
| JP | 2011-154981 | A | 11 August 2011 | (Family: none) | | | |
| JP | 2014-26962 | A | 06 February 2014 | US | 2015/0187516 | A1 | |
| | | | | WO | 2013/191080 | A1 | |
| | | | | CN | 104205442 | A | |
| | | | | KR | 10-2015-0023228 | A | |
| KR | 10-2019-0029320 | A | 20 March 2019 | (Family: none) | | | |
| WO | 2022/039002 | A1 | 24 February 2022 | EP | 4203108 | A1 | |
| | | | | CN | 116075952 | A | |
| | | | | KR | 10-2023-0054404 | A | |

Form PCT/ISA/210 (patent family annex) (January 2015)

**EP 4 589 692 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10298386 A
- JP 2019194944 A
- JP 5999399 B
- JP 5477610 B
- JP 2020184461 A